# EUROPÄISCHE PATENTSCHRIFT

(11) **EP 3 877 465 B1**
(45) Veröffentlichungstag und Bekanntmachung des Hinweises auf die Patenterteilung: **11.01.2023**
(21) Anmeldenummer: 20824441.8
(22) Anmeldetag: 12.11.2020
(51) Int. Cl.: C08L 79/02, C08L 79/08, B29C 64/118, B33Y 10/00

(54) **VERWENDUNG VON GUSSPOLYAMID-FILAMENT UND GUSSPOLYAMID-GRANULAT ZUR ADDITIVEN FERTIGUNG UND HERSTELLUNGSVERFAHREN**
USE OF CAST-POLYAMIDE FILAMENT AND CAST-POLYAMIDE GRANULAR MATERIAL FOR ADDITIVE MANUFACTURING, AND PRODUCTION PROCESS
UTILISATION DE FILAMENT DE POLYAMIDE COULÉ ET DE GRANULAT DE POLYAMIDE COULÉ POUR LA FABRICATION ADDITIVE ET PROCÉDÉ DE RÉALISATION

(30) Priorität: 18.11.2019 DE 102019131083
(43) Veröffentlichungstag der Anmeldung: 15.09.2021
(73) Patentinhaber: Elkamet Kunststofftechnik GmbH, 35216 Biedenkopf (DE)
(72) Erfinder: EMRICH, Marco, 35327 Ulrichstein (DE); FLAMMER, Eberhard, 35216 Biedenkopf (DE); NEEBE, Martin, 35260 Stadtallendorf (DE)
(86) Internationale Anmeldenummer: PCT/DE2020/100964
(87) Internationale Veröffentlichungsnummer: WO 2021/098910

(56) Entgegenhaltungen:
- EP-A1- 3 305 510
- WO-A1-2019/158599

## Beschreibung

Die Erfindung befasst sich mit der Verwendung von Gusspolyamid-Filamenten und Gusspolyamid-Granulat zur additiven Fertigung mittels eines Schmelzschichtungsverfahrens. Weiterhin befasst sich die Erfindung mit einem Verfahren zur Herstellung eines Gegenstandes mittels additiver Fertigung unter Verwendung eines Gusspolyamid-Filaments oder von Gusspolyamid-Granulat.

Es ist aus der EP 2662199 A1 bekannt, pulverisiertes Polyamid 12, pulverisiertes Polyamid 11 und pulverisiertes Polyamid 613 zur additiven Fertigung mittels selektivem Lasersintern zu verwenden. Die Schrift EP 3 305 510 A1 beschreibt ein Verfahren zum Polieren von in einem derartigen Lasersinterverfahren aus Polyamiden hergestellten Gegenständen. Die Schrift WO 2019/158599 A1 offenbart ein Verfahren zum Applizieren eines Polyurethan-Schmelzklebers oberhalb seiner Zersetzungstemperatur, bei welchem auch ein Schmelzschichtungsverfahren eingesetzt werden kann.

Gusspolyamide sind Polyamide, die mittels anionischer Polymerisation hergestellt wurden und herstellungsbedingt höhere Molekulargewichte aufweisen als Extrusions-und Spritzgusstypen der jeweiligen Polyamide, welche in der Regel durch hydrolytische Polymerisation aus Lactamen oder durch Polykondensation aus Aminocarbonsäuren hergestellt werden. Die Herstellung von Gusspolyamiden, etwa von Gusspolyamid 6, mittels anionischer Polymerisation aus Lactam ist bekannt und beispielsweise in DE 102014106998 A1, DE 102014111685 A1 und DE 102015106042 A1 beschrieben.

So weist beispielsweise ein Gusspolyamid 6 ein höheres Molekulargewicht auf als ein Extrusionstyp-Polyamid 6. Deswegen besitzen Gusspolyamide gegenüber für Extrusion oder Spritzguss eingesetzten Polyamiden vorteilhafte Eigenschaften.

Beispielsweise weisen Gusspolyamide im Vergleich zu Extrusionstyp-Polyamiden eine höhere Streckspannung, einen höheren Zug-E-Modul und eine höhere Vicat-Erweichungstemperatur auf. Insbesondere ist die Wärmeformbeständigkeit, d.h. die kurzzeitige Temperaturbeständigkeit, bei Gusspolyamiden erhöht.

Weitere bekannte Vorteile der Gusspolyamide gegenüber Extrusionstyp-Polyamiden sind ein höheres Molekulargewicht, eine höhere Kristallinität, eine geringere Kriechneigung, eine erhöhte Zugfestigkeit, Härte und Steifigkeit, eine hohe Abriebfestigkeit und eine höhere Standfestigkeit und Steifigkeit bei Wärmeeinwirkung (Domininghaus; Kunststoffe: Eigenschaften und Anwendung; Springer (2012); 701).

Nachteilig ist, dass die Wärmeformbeständigkeit der üblicherweise für die additive Fertigung verwendeten Polyamide begrenzt ist.

Um eine verbesserte Wärmeformbeständigkeit zu erreichen, wird in formgebenden Verfahren häufig auf Gusspolyamide zurückgegriffen.

Weiterhin nachteilig ist, dass Polyamide für die additive Fertigung üblicherweise als Neuware verwendet werden. Der bei der Fertigung von Polyamid-Werkstücken entstehende Polyamid-Ausschuss hingegen bleibt ungenutzt und wird dem Abfallkreislauf zugeführt.

Weiterhin nachteilig ist die notwendige Beheizung von Bauraum und Druckbett bei der additiven Fertigung mittels Schmelzschichtungsverfahren mit Polyamiden.

Ein weiterer Nachteil ist das starke Schrumpfverhalten der Polyamide, was die additive Fertigung erschwert.

Die technische Aufgabe und das Ziel der Erfindung bestehen darin, Verbesserungen gegenüber dem Stand der Technik zu erreichen.

Dieses Ziel wird durch die Verwendung eines Gusspolyamid-Filaments zur additiven Fertigung mittels eines Schmelzschichtungsverfahrens erreicht. Das Ziel wird ebenfalls erreicht durch ein Verfahren zur Herstellung eines Gegenstandes mittels additiver Fertigung unter Verwendung eines Gusspolyamid-Filaments, wobei die additive Fertigung mittels eines Schmelzschichtungsverfahrens erfolgt.

Gusspolyamide sind Polyamide, die mittels anionischer Polymerisation aus Vorläufern unter Zusatz eines Katalysators und in der Regel eines Aktivators hergestellte wurden. Hierbei handelt es sich beispielsweise um Polyamid 6 (PA6) oder Polyamid 12 (PA12), für deren Herstellung als Vorläufer Caprolactam (für PA6) oder Laurinlactam (für PA12) eingesetzt werden. Gusspolyamide im Sinne der Erfindung sind neben Polyamid 6 und Polyamid 12 auch Blends umfassend Polyamid 6 und Polyamid 12 oder Copolymere umfassend Polyamid 6 und Polyamid 12. Besonders bevorzugt ist Polyamid 6. Die Herstellung von Gusspolyamiden erfolgt häufig unter gleichzeitiger Formgebung in einem Standguss-, Schleuderguss- oder Rotationsgussverfahren.

Der besondere Vorteil bei der Verwendung von Gusspolyamid-Filamenten besteht im Erhalt eines für Gusspoylamide typischen höheren Molekulargewichts im Vergleich zu Filamenten aus Extrusionstyp-Polyamiden.

Hieraus ergibt sich auch der Erhalt der für Gusspolyamide typischen Eigenschaften.

Dies sind beispielhaft eine höhere Wärmeformbeständigkeit, eine höhere Streckspannung, ein höherer E-Modul und eine höhere Vicat-Erweichungstemperatur im Vergleich zu Extrusionstyp-Polyamiden.

Die Herstellung von Gusspolyamid-Filamenten zur additiven Fertigung mittels Schmelzschichtungsverfahren kann erfolgen durch Zerkleinern von aus Gusspolyamid bestehenden Werkstücken, etwa Platten oder Rundkörpern.

Hierbei kann neben Gusspolyamiden, welche speziell für die Extrusion hergestellt wurden, auch zu rezyklierendes Material verwendet werden. Das zu rezyklierende Material ist beispielsweise Restmaterial, Ausschussmaterial oder Altmaterial. Hierbei ist zu beachten, dass das zu rezyklierende Material sortenrein ist. Durch die Zerkleinerung werden Gusspolyamid-Stücke mit einer Größe von 1 mm bis 50 mm, bevorzugt 5 mm bis 40 mm, weiterhin bevorzugt 5 mm bis 30 mm und besonders bevorzugt 6 mm bis 12 mm erhalten. In Abhängigkeit von den Eigenschaften des zur weiteren Verarbeitung vorgesehenen Extruders können die erhaltenen Gusspolyamid-Stücke noch gemahlen werden. Hierbei können Größen von 0,3 mm bis 6 mm erhalten werden.

Das so erhaltene optional gemahlene Gusspolyamid stellt das Ausgangsmaterial für die Extrusion dar. Soweit keine Entgasung bei der Extrusion erfolgt, sollte das Ausgangsmaterial vorgetrocknet werden. Dies kann üblicherweise bei 80°C über 4 Stunden erfolgen. Weiterhin möglich ist auch eine Vortrocknung über 4 Tage bei 100°C. Als Ausgangsmaterial kann alternativ auch pulverisiertes Gusspolyamid, welches durch bekannte Verfahren durch anionische Polymerisation in einem Rieselturm hergestellt wurde, verwendet werden. Dieses Verfahren ist beispielweise in der EP 2460838 A1 beschrieben.

Die Extrusion erfolgt in einem herkömmlichen Verfahren bei einer Extrudertemperatur, die 40°C bis 100°C oberhalb der Schmelztemperatur des verwendeten Gusspolyamids liegt. Im Fall von PA6 können beispielsweise Temperaturen von 260°C bis 280°C oder 270°C bis 275°C verwendet werden, beispielsweise Temperaturen von 260°C, 265°C, 270°C, 275°C und 280°C, jeweils mit einer Toleranz von ± 2,5°C. Weiterhin erfolgt optional während der Extrusion eine Entgasung.

Weiterhin kann die Extrusion optional auch unter einer Stickstoff-Atmosphäre, insbesondere unter Ausschluss von Sauerstoff, erfolgen. Bei der Extrusion können dem Material Additive zugesetzt werden, beispielsweise Hitzestabilisatoren, UV-Stabilisatoren, Füll- oder Verstärkungsstoffe (Glasfasern, Kohlefasern, Kohlenstoff-Nanoröhren, etc.) oder Verarbeitungshilfsmittel wie Gleitmittel oder dergleichen.

Das Gusspolyamid kann dabei zu einem für die additive Fertigung nutzbaren Filament, dessen Form beliebig ist und daher beispielsweise rund oder mehreckig sein kann, mit einem Durchmesser von 1 mm bis 10 mm, etwa einem Durchmesser von 1 mm, 1,5 mm, 1,75 mm, 2 mm, 2,5 mm, 2,80 mm, 2,85 mm, 2,90 mm, 2,95 mm, 3 mm, 4 mm, 4,5 mm, 5 mm, 5,5 mm, 6 mm, 6,5 mm, 7 mm, 7,5 mm, 8 mm, 8,5 mm, 9 mm, 9,5 mm oder 10 mm, extrudiert werden, wobei für alle genannten Werte jeweils eine Toleranz von ± 20% gelten kann, so dass beispielsweise die Angabe "1 mm" den Bereich von 0,8 mm bis 1,2 mm umfasst.

Der Begriff "Durchmesser" ist nicht mathematisch streng derart zu verstehen, dass das Filament einen exakt runden Querschnitt aufweisen muss, sondern kann im Fall unrunder Querschnitte im Sinne eines Mittelwerts aus einer größten und einer kleinsten Querschnittsausdehnung verstanden werden.

Extrudierte Filamente können auch mittels eines Stranggranulators auf eine Größe von beispielsweise 3 mm granuliert werden und als Gusspolyamid-Granulat für andere formgebende Verfahren, beispielsweise Extrudieren, Spritzgießen und Thermoformen, verwendet werden.

Alternativ hierzu kann die anionische Polymerisation auch erst im Extruder, in situ, im Rahmen der Extrusion erfolgen. Hierbei werden die zur anionischen Polymerisation notwendigen Vorläuferstoffe, wie Caprolactam, Aktivator und Katalysator, optional unter Zusatz von Additiven, in den Extruder gegeben und bei geeigneter Temperatur und insbesondere unter einer Stickstoff-Atmosphäre zu Polyamid polymerisiert und dann das gerade entstandene Polyamid unter den obigen Bedingungen extrudiert. Dieses Verfahren ist auch als "reaktive Extrusion" bekannt.

Neben der Extrusion von Filamenten können mittels des oben angegebenen Verfahrens auch von der Form der Filamente abweichende Extrudate hergestellt werden.

Das erfindungsgemäß zur additiven Fertigung verwendete oder im erfindungsgemäßen Herstellungsverfahren eingesetzte Gusspolyamid-Filament wie auch das oben genannte Gusspolyamid-Granulat, welches etwa nach dem obigen Verfahren hergestellt werden kann, weist dabei gegenüber dem für das Schmelzschichtungsverfahren üblicherweise genutzten Extrusionstyp-Polyamid verbesserte mechanische Eigenschaften auf. Das Gusspolyamid-Filament kann die nachfolgend erläuterten Eigenschaften aufweisen.

Das Gusspolyamid-Filament und das Gusspolyamid-Granulat hat bei einem trockenen Prüfkörper eine Streckspannung nach ISO 527 von mindestens 80 MPa, bevorzugt von 85 MPa bis 100 MPa, beispielsweise von jeweils mindestens 85 MPa, 90 MPa, 95 MPa oder 97 MPa.

Der Zug-E-Modul des Gusspolyamid-Filaments und des Gusspolyamid-Granulats bei trockenem Prüfkörper nach ISO 527 (5 mm/min) liegt bei mindestens 3000 MPa, bevorzugt bei 3300 MPa bis 4000 MPa, beispielsweise bei jeweils mindestens 3300 MPa, 3400 MPa, 3500 MPa, 3600 MPa, 3700 MPa, 3800 MPa, 3900 MPa oder 3950 MPa.

Die Wärmeformbeständigkeit HDT A des Gusspolyamid-Filaments und des Gusspolyamid-Granulats bei trockenem Prüfkörper nach ISO 75 liegt bei mindestens 65°C, bevorzugt bei 80°C bis 150°C, beispielsweise bei jeweils mindestens 80°C, 85°C, 90°C, 95°C, 100°C, 105°C, 110°C, 115°C, 120°C, 125°C, 130°C, 135°C, 140°C, 145°C oder147°C.

Die Wärmeformbeständigkeit HDT B des Gusspolyamid-Filaments und des Gusspolyamid-Granulats bei trockenem Prüfkörper nach ISO 75 liegt bei mindestens 160°C, bevorzugt bei 180°C bis 240°C, beispielsweise bei jeweils mindestens 180°C, 185°C, 190°C, 195°C, 200°C, 205°C, 210°C, 215°C, 220°C, 225°C, 230°C, 235°C oder 237°C.

Die Vicat-Erweichungstemperatur VST/B/50 des Gusspolyamid-Filaments und des Gusspolyamid-Granulats bei trockenem Prüfkörper nach ISO 306 liegt bei mindestens 205°C, bevorzugt bei 208°C bis 220°C, beispielsweise bei jeweils mindestens 208°C, 209°C, 210°C, 215° oder 217°C.

Das erfindungsgemäß zur additiven Fertigung verwendete oder im erfindungsgemäßen Herstellungsverfahren eingesetzte Gusspolyamid-Filament kann, wie oben bereits erläutert, insbesondere aus einem Restmaterial, einem Ausschussmaterial oder einem Altmaterial hergestellt sein oder ein Restmaterial, ein Ausschussmaterial oder ein Altmaterial umfassen.

Zur additiven Fertigung mittels des erfindungsgemäßen Schmelzschichtungsverfahrens wird das aus Gusspolyamid bestehende extrudierte Filament oder auch das oben genannte Gusspolyamid-Granulat in eine geeignete Düse eingebracht und die Düse bei einer Temperatur von 40°C bis 100°C oberhalb der Schmelztemperatur des Gusspolyamids betrieben. Im Fall von PA6 liegt die Düsentemperatur bei mindestens 260°C, insbesondere bei 280°C bis 310°C. Die Düsentemperatur kann dabei 260°C, 270°C, 280°C, 285°C, 290°C, 295°C, 300°C, 305°C oder 310°C betragen. Eine Düsentemperatur von 295°C ist bevorzugt. Für alle genannten Werte soll jeweils eine Toleranz von ± 2,5°C gelten.

Es wurde überraschend gefunden, dass auf Grund des höheren Molekulargewichts und der höheren Schmelzviskosität von Gusspolyamiden im Vergleich zu Extrusionstyp-Polyamiden eine höhere Düsentemperatur verwendet werden kann, ohne dass die anfängliche Stabilität des im Schmelzschichtungsverfahren deponierten Materials im heißen Zustand zu gering ist (wodurch das Material "wegfließen" würde und keine maßgenauen 3D-Objekte aufgebaut werden könnten).

Durch die höhere Düsentemperatur weist das deponierte Material eine höhere Temperatur auf, wodurch die Zwischenschichthaftung zwischen jeweils aufeinanderfolgenden Schichten verbessert wird. Dadurch kann auf eine Beheizung des Bauraums und/oder des Druckbetts verzichtet werden. Mithin kann die additive Fertigung mittels Schmelzschichtungsverfahren mit den Gusspolyamiden bei einer Bauraumtemperatur und/oder bei einer Druckbetttemperatur erfolgen, welche im Wesentlichen bei Raumtemperatur liegt oder liegen.

Ebenfalls Teil der Erfindung ist ein Verfahren zur Herstellung eines Gegenstandes mittels additiver Fertigung in einem Schmelzschichtungsverfahren und unter Verwendung eines Gusspolyamid-Filaments. Bezüglich geeigneter Gusspolyamid-Filamente und geeigneter Verfahrensparameter verweisen wir auf die vorangehenden Erläuterungen.

Die durch das Schmelzschichtungsverfahren aus Gusspolyamid-Filamenten oder aus verwendbaren Gusspolyamid-Granulaten nach dem zuvor geschilderten Verfahren hergestellten Produkte zeichnen sich durch verbesserte mechanische Eigenschaften gegenüber im Schmelzschichtungsverfahren aus Extrusionstyp-Polyamiden hergestellten Produkten aus. Dies sind etwa eine höhere Streckspannung, ein höherer E-Modul und eine höhere Wärmeformbeständigkeit. Insbesondere ist bevorzugt, dass die hergestellten Produkte dieselben oder vergleichbare mechanische Eigenschaften aufweisen, wie die eingesetzten Gusspolyamid-Filamente oder Gusspolyamid-Granulate.

So weist ein nach den obigen Vorgaben zum Schmelzschichtungsverfahren erfindungsgemäß aus Gusspolyamid-Filament hergestelltes Produkt eines oder mehrere der folgenden Merkmale auf:
Das hergestellte Produkt hat bei einem trockenen Prüfkörper eine Streckspannung nach ISO 527 von mindestens 80 MPa, bevorzugt von 85 MPa bis 100 MPa, beispielsweise von jeweils mindestens 85 MPa, 90 MPa, 95 MPa oder 97 MPa.

Der Zug-E-Modul des hergestellten Produkts bei trockenem Prüfkörper nach ISO 527 (5 mm/min) liegt bei mindestens 3000 MPa, bevorzugt bei 3300 MPa bis 4000 MPa, beispielsweise bei jeweils mindestens 3300 MPa, 3400 MPa, 3500MPa, 3600 MPa, 3700 MPa, 3800 MPa, 3900 MPa oder 3950 MPa.

Die Wärmeformbeständigkeit HDT A des hergestellten Produkts bei trockenem Prüfkörper nach ISO 75 beträgt mindestens 65°C, bevorzugt 80°C bis 150°C, beispielsweise jeweils mindestens 80°C, 85°C, 90°C, 95°C, 100°C, 105°C, 110°C, 115°C, 120°C, 125°C, 130°C, 135°C, 140°C, 145°C oder 147°C.

Die Wärmeformbeständigkeit HDT B des hergestellten Produkts bei trockenem Prüfkörper nach ISO 75 beträgt mindestens 160°C, bevorzugt 180°C bis 240°C, beispielsweise jeweils mindestens 180°C, 185°C, 190°C, 195°C, 200°C, 205°C, 210°C, 215°C, 220°C, 225°C, 230°C, 235°C oder 237°C.

Die Vicat-Erweichungstemperatur VST/B/50 des hergestellten Produkts bei trockenem Prüfkörper nach ISO 306 beträgt mindestens 205°C, bevorzugt 208°C bis 220°C, beispielsweise jeweils mindestens 208°C, 209°C, 210°C, 215° oder 217°C.

Ferner ist hervorzuheben, dass das Molekulargewicht des Gusspolyamids, welches zur additiven Fertigung verwendet wird, in einem solchen Herstellungsverfahren genutzt wird und/oder in einem daraus hergestellten Gegenstand enthalten ist, höher ist als das Molekulargewicht von Extrusionstyp-Polyamiden.

Abbildungen:

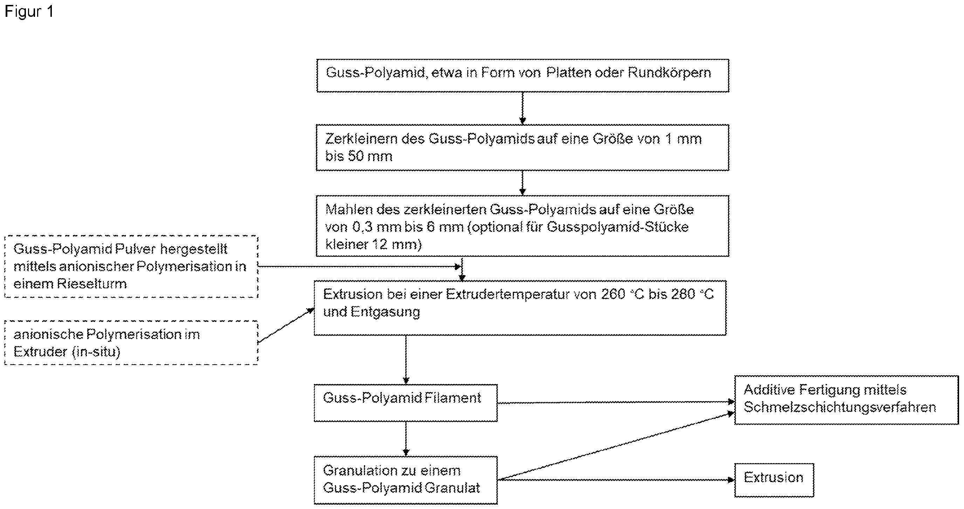

- Figur 1: Herstellung von Gusspolyamid-Filament und nachfolgende Verwendung in der additiven Fertigung

Ein die Erfindung nicht begrenzendes erstes Beispiel stellt die nachfolgende Beschreibung der Herstellung von Filamenten aus Gusspolyamid 6 und deren Verwendung beim Schmelzschichtungsverfahren dar.

Zunächst wurde im Rotationsverfahren ein Behälter beliebiger Geometrie aus Gusspolyamid 6 hergestellt. Hierbei wurden in bekannter Weise zunächst Caprolactam, ein Aktivator und ein Katalysator in die Rotationsform eingespritzt und diese unter Wärmezufuhr rotiert. Während der Rotation erfolgte die anionische Polymerisation der Ausgangsstoffe zu Gusspolyamid 6 bei gleichzeitiger Formgebung des Behälters. Rezepturen und detailliertere Verfahrensbeschreibungen sind dem Fachmann bekannt und beispielhaft in der Schrift DE102014106998A1 gezeigt.

Die bei der Behälterfertigung entstehenden Materialreste (beispielsweise Ausschnitte zur Herstellung von Behälteröffnungen und dergleichen) enthaltend das Gusspolyamid 6 wurden sortenrein gesammelt und auf eine Größe von 6 mm bis 12 mm zerkleinert. Die so erhaltenen Stücke wurden anschließend auf eine Größe von 0,3 mm bis 3 mm gemahlen.

Das aus Gusspolyamid 6 bestehende Mahlgut wurde nun in einen Einzelschnecken-Extruder gegeben. Bei einer Extrudertemperatur von 260°C und unter Entgasung wurde ein Gusspolyamid-Filament mit einem Durchmesser von 2,85 mm hergestellt.

Das so erhaltene Filament wurde anschließend zur additiven Fertigung in einem Schmelzschichtungsverfahren (FDM) verwendet, wobei die verwendete Düse eine Düsentemperatur von etwa 290°C aufwies.

Das Verfahren ist weiterhin in der Figur 1 dargestellt.

In einem weiteren nicht begrenzenden Beispiel wurde das Molekulargewicht des Gusspolyamid-Filaments untersucht.

Ausgehend von einem mittels anionischer Polymerisation hergestellten Gusspolyamid 6, welches üblicherweise ein Molekulargewicht Mₙ (Zahlenmittel) von 180.000 - 230.000 g/mol hat, wurde durch Mahlen ein Mahlgut erhalten an welchem ein Molekulargewicht Mₙ von 192.000 g/mol ermittelt wurde.

Im nächsten Verfahrensschritt wurde das gemahlene Gusspolyamid 6 bei 260°C - 290°C Zylindertemperatur unter Entgasung extrudiert. Das resultierende Gusspolyamid-Filament wies ein Molekulargewicht Mₙ von 62.000 g/mol auf.

An dem Material des durch additive Fertigung aus dem Gusspolyamid-Filament hergestellten Produkts wurde ein Molekulargewicht Mₙ von 68.000 g/mol ermittelt. Dieser Wert ist 3 bis 5 mal höher als das Molekulargewicht von üblichem Spritzguss-Polyamid 6 und verleiht dem additiv gefertigten Produkt die oben genannten vorteilhaften Eigenschaften.

Mittels der additiven Fertigung mittels Schmelzschichtungsverfahren unter Verwendung des Gusspolyamid-Filaments wurde ein Prüfkörper (ISO 527, Typ1b) hergestellt. Der an dem trockenen Prüfkörper ermittelte E-Modul betrug 3.800 MPa.

## Patentansprüche

1. Verwendung eines Polyamid-Filaments zur additiven Fertigung, **dadurch gekennzeichnet, dass** das Polyamid ein Gusspolyamid ist und dass die additive Fertigung mittels eines Schmelzschichtungsverfahrens erfolgt.

2. Verwendung nach Anspruch 1, **dadurch gekennzeichnet, dass** das Polyamid einen Zug-E-Modul nach ISO 527 von 3300 MPa bis 4000 MPa aufweist.

3. Verwendung nach einem der Ansprüche 1 bis 2, **dadurch gekennzeichnet, dass** das Polyamid eine Wärmeformbeständigkeit HDT A nach ISO 75 von 80°C bis 150°C und/oder eine Wärmeformbeständigkeit HDT B nach ISO 75 von 180°C bis 240°C aufweist.

4. Verwendung nach einem der Ansprüche 1 bis 3, **dadurch gekennzeichnet, dass** das Polyamid eine Streckspannung nach ISO 527 von 85 MPa bis 100 MPa und/oder eine Vicat-Erweichungstemperatur VST/B/50 nach ISO 306 von 208°C bis 220°C aufweist.

5. Verwendung nach einem der Ansprüche 1 bis 4, **dadurch gekennzeichnet, dass** das Polyamid ein Polyamid 6, ein Polyamid 12, einen Blend umfassend Polyamid 6 und Polyamid 12 oder ein Copolymer umfassend Polyamid 6 und Polyamid 12 umfasst.

6. Verwendung nach einem der Ansprüche 1 bis 5, **dadurch gekennzeichnet, dass** das Polyamid-Filament aus einem Restmaterial, einem Ausschussmaterial oder einem Altmaterial hergestellt ist oder ein Restmaterial, ein Ausschussmaterial oder ein Altmaterial umfasst.

7. Verwendung nach einem der Ansprüche 1 bis 6, **dadurch gekennzeichnet, dass** eine bei dem Schmelzschichtungsverfahren verwendete Düse eine Düsentemperatur von 280°C bis 310°C aufweist.

8. Verwendung nach einem der Ansprüche 1 bis 7, **dadurch gekennzeichnet, dass** bei dem Schmelzschichtungsverfahren eine Bauraumtemperatur und/oder eine Druckbetttemperatur im Wesentlichen bei Raumtemperatur liegt oder liegen.

9. Verfahren zur Herstellung eines Gegenstandes mittels additiver Fertigung unter Verwendung eines Polyamid-Filaments, **dadurch gekennzeichnet, dass** das Polyamid ein Gusspolyamid ist und dass die additive Fertigung mittels eines Schmelzschichtungsverfahrens erfolgt.

10. Verfahren nach Anspruch 9, **dadurch gekennzeichnet, dass** das Polyamid einen Zug-E-Modul nach ISO 527 von 3300 MPa bis 4000 MPa aufweist.

11. Verfahren nach einem der Ansprüche 9 bis 10, **dadurch gekennzeichnet, dass** das Polyamid eine Wärmeformbeständigkeit HDT A nach ISO 75 von 80°C bis 150°C und/oder eine Wärmeformbeständigkeit HDT B nach ISO 75 von 180°C bis 240°C aufweist.

12. Verfahren nach einem der Ansprüche 9 bis 11, **dadurch gekennzeichnet, dass** das Polyamid eine Streckspannung nach ISO 527 von 85 MPa bis 100 MPa und/oder eine Vicat-Erweichungstemperatur VST/B/50 nach ISO 306 von 208°C bis 220°C aufweist.

13. Verfahren nach einem der Ansprüche 9 bis 12, **dadurch gekennzeichnet, dass** das Polyamid ein Polyamid 6, ein Polyamid 12, einen Blend umfassend Polyamid 6 und Polyamid 12 oder ein Copolymer umfassend Polyamid 6 und Polyamid 12 umfasst.

14. Verfahren nach einem der Ansprüche 9 bis 13, **dadurch gekennzeichnet, dass** das Polyamid-Filament aus einem Restmaterial, einem Ausschussmaterial oder einem Altmaterial hergestellt ist oder ein Restmaterial, ein Ausschussmaterial oder ein Altmaterial umfasst.

15. Verfahren nach einem der Ansprüche 9 bis 14, **dadurch gekennzeichnet, dass** eine bei dem Schmelzschichtungsverfahren verwendete Düse eine Düsentemperatur von 280°C bis 310°C aufweist.

16. Verfahren nach einem der Ansprüche 9 bis 15, **dadurch gekennzeichnet, dass** bei dem Schmelzschichtungsverfahren eine Bauraumtemperatur und/oder eine Druckbetttemperatur im Wesentlichen bei Raumtemperatur liegt oder liegen.

17. Gegenstand, hergestellt mittels additiver Fertigung unter Verwendung eines Polyamid-Filaments, **dadurch gekennzeichnet, dass** das Polyamid ein Gusspolyamid ist und dass die additive Fertigung mittels eines Schmelzschichtungsverfahrens erfolgt.

18. Gegenstand nach Anspruch 17, **dadurch gekennzeichnet, dass** die additive Fertigung in einem Verfahren nach einem der Ansprüche 10 bis 16 und/oder unter Verwendung eines Gusspolyamid-Filaments nach einem der Ansprüche 2 bis 8 erfolgt.

## Claims

1. Use of a polyamide filament for additive manufacturing, **characterized in that** the polyamide is a cast polyamide and **in that** the additive manufacturing is performed using a fused deposition modeling process.

2. The use as recited in claim 1, **characterized in that** the polyamide has a Young's modulus in tension according to ISO 527 of 3300 MPa to 4000 MPa.

3. The use as recited in any of claims 1 through 2, **characterized in that** the polyamide has a heat-distortion temperature HDT A according to ISO 75 of 80°C to 150°C and/or a heat-distortion temperature HDT B according to ISO 75 of 180°C to 240°C.

4. The use as recited in any of claims 1 through 3, **characterized in that** the polyamide has a yield stress according to ISO 527 of 85 MPa to 100 MPa and/or a Vicat softening temperature VST/B/50 according to ISO 306 of 208°C to 220°C.

5. The use as recited in any of claims 1 through 4, **characterized in that** the polyamide includes a polyamide 6, a polyamide 12, a blend including polyamide 6 and polyamide 12, or a copolymer including polyamide 6 and polyamide 12.

6. The use as recited in any of claims 1 through 5, **characterized in that** the polyamide filament is made from a residual material, a reject material, or a used material or includes a residual material, a reject material, or a used material.

7. The use as recited in any of claims 1 through 6, **characterized in that** a nozzle used in the fused deposition modeling process has a nozzle temperature of 280°C to 310°C.

8. The use as recited in any of claims 1 through 7, **characterized in that**, during the fused deposition modeling process, a building chamber temperature and/or a printing bed temperature are/is substantially equal to room temperature.

9. A process for producing an object by additive manufacturing using a polyamide filament, **characterized in that** the polyamide is a cast polyamide and **in that** the additive manufacturing is performed using a fused deposition modeling process.

10. The method as recited in claim 9, **characterized in that** the polyamide has a Young's modulus in tension according to ISO 527 of 3300 MPa to 4000 MPa.

11. The method as recited in any of claims 9 through 10, **characterized in that** the polyamide has a heat-distortion temperature HDT A according to ISO 75 of 80°C to 150°C and/or a heat-distortion temperature HDT B according to ISO 75 of 180°C to 240°C.

12. The method as recited in any of claims 9 through 11, **characterized in that** the polyamide has a yield stress according to ISO 527 of 85 MPa to 100 MPa and/or a Vicat softening temperature VST/B/50 according to ISO 306 of 208°C to 220°C.

13. The method as recited in any of claims 9 through 12, **characterized in that** the polyamide includes a polyamide 6, a polyamide 12, a blend including polyamide 6 and polyamide 12, or a copolymer including polyamide 6 and polyamide 12.

14. The method as recited in any of claims 9 through 13, **characterized in that** the polyamide filament is made from a residual material, a reject material, or a used material or includes a residual material, a reject material, or a used material.

15. The method as recited in any of claims 9 through 14, **characterized in that** a nozzle used in the fused deposition modeling process has a nozzle temperature of 280°C to 310°C.

16. The method as recited in any of claims 9 through 15, **characterized in that**, during the fused deposition modeling process, a building chamber temperature and/or a printing bed temperature are/is substantially equal to room temperature.

17. An object produced by additive manufacturing using a polyamide filament, **characterized in that** the polyamide is a cast polyamide and **in that** the additive manufacturing is performed using a fused deposition modeling process.

18. The object as recited in claim 17, **characterized in that** the additive manufacturing is performed in a process according to any of claims 10 through 16 and/or using a cast-polyamide filament according to any of claims 2 through 8.

## Revendications

1. Utilisation d'un filament de polyamide pour la fabrication additive, **caractérisée en ce que** le polyamide est un polyamide de coulée et **en ce que** la fabrication additive a lieu par un procédé de dépôt de fil fondu.

2. Utilisation selon la revendication 1, **caractérisée en ce que** le polyamide présente un module d'élasticité en traction selon ISO 527 de 3300 MPa à 4000 MPa.

3. Utilisation selon l'une des revendications 1 à 2, **caractérisée en ce que** le polyamide présente une stabilité dimensionnelle à chaud HDT A selon ISO 75 de 80 °C à 150 °C et/ou une stabilité dimensionnelle à chaud HDT B selon ISO 75 de 180 °C à 240 °C.

4. Utilisation selon l'une des revendications 1 à 3, **caractérisée en ce que** le polyamide présente une limite d'élasticité selon ISO 527 de 85 MPa à 100 MPa et/ou une température de ramollissement de Vicat VST/B/50 selon ISO 306 de 208 °C à 220 °C.

5. Utilisation selon l'une des revendications 1 à 4, **caractérisée en ce que** le polyamide comprend un polyamide 6, un polyamide 12, un mélange comprenant du polyamide 6 et du polyamide 12 ou un copolymère comprenant du polyamide 6 et du polyamide 12.

6. Utilisation selon l'une des revendications 1 à 5, **caractérisée en ce que** le filament de polyamide est fabriqué à partir d'un matériau résiduel, d'un retour de fabrication ou d'un matériau usé, ou comprend un matériau usé, un retour de fabrication ou un matériau usé.

7. Utilisation selon l'une des revendications 1 à 6, **caractérisée en ce qu'**une buse utilisée dans le procédé de dépôt de fil fondu présente une température de buse de 280 °C à 310 °C.

8. Utilisation selon l'une des revendications 1 à 7, **caractérisée en ce que**, dans le procédé de dépôt de fil fondu, une température de l'espace de construction et/ou une température du lit d'impression est ou sont pour l'essentiel à la température ambiante.

9. Procédé de fabrication d'un objet par fabrication additive par utilisation d'un filament de polyamide, **caractérisé en ce que** le polyamide est un polyamide de coulée et **en ce que** la fabrication additive s'effectue par un procédé de dépôt de fil fondu.

10. Procédé selon la revendication 9, **caractérisé en ce que** le polyamide présente un module d'élasticité en traction selon ISO 527 de 3300 MPa à 4000 MPa.

11. Procédé selon l'une des revendications 9 à 10, **caractérisé en ce que** le polyamide présente une stabilité dimensionnelle à chaud HDT A selon ISO 75 de 80 °C à 150 °C et/ou une stabilité dimensionnelle à chaud HDT B selon ISO 75 de 180 °C à 240 °C.

12. Procédé selon l'une des revendications 9 à 11, **caractérisé en ce que** le polyamide présente une limite d'élasticité selon ISO 527 de 85 MPa à 100 MPa et/ou une température de ramollissement de Vicat VST/B/50 selon ISO 306 de 208 °C à 220 °C.

13. Procédé selon l'une des revendications 9 à 12, **caractérisé en ce que** le polyamide comprend un polyamide 6, un polyamide 12, un mélange comprenant du polyamide 6 et du polyamide 12 ou un copolymère comprenant du polyamide 6 et du polyamide 12.

14. Procédé selon l'une des revendications 9 à 13, **caractérisé en ce que** le filament de polyamide est fabriqué à partir d'un matériau résiduel, d'un retour de fabrication ou d'un matériau usé ou comprend un matériau résiduel, un retour de fabrication ou un matériau usé.

15. Procédé selon l'une des revendications 9 à 14, **caractérisé en ce qu'**une buse utilisée dans le procédé de dépôt de fil fondu présente une température de buse de 280 °C à 310 °C.

16. Procédé selon l'une des revendications 9 à 15, **caractérisé en ce que**, dans le procédé de dépôt de fil fondu, une température de l'espace de construction et/ou une température du lit d'impression est ou sont pour l'essentiel à la température ambiante.

17. Objet fabriqué par fabrication additive par utilisation d'un filament de polyamide, **caractérisé en ce que** le polyamide est un polyamide de coulée et **en ce que** la fabrication additive s'effectue par un procédé de dépôt de fil fondu.

18. Objet selon la revendication 17, **caractérisé en ce que** la fabrication additive est mise en œuvre dans un procédé selon l'une des revendications 10 à 16 et/ou par utilisation d'un filament de polyamide de coulée selon l'une des revendications 2 à 8.
